# EUROPÄISCHE PATENTSCHRIFT

(11) **EP 1 955 761 B1**
(45) Veröffentlichungstag und Bekanntmachung des Hinweises auf die Patenterteilung: **09.11.2016**
(21) Anmeldenummer: 07033523.7
(22) Anmeldetag: 19.10.2007
(51) Int. Cl.: B01J 2/10, B01F 7/00

(54) **Mischgranulator**
Mixing granulator
Granulateur de mélange

(30) Priorität: 07.02.2007 DE 102007006024
(43) Veröffentlichungstag der Anmeldung: 13.08.2008
(73) Patentinhaber: L. B. Bohle Maschinen + Verfahren GmbH, 59320 Ennigerloh (DE)
(72) Erfinder: Bohle, Lorenz, 59320 Ennigerloh (DE)
(74) Vertreter: Habbel, Ludwig

(56) Entgegenhaltungen:
- DE-A1- 2 162 353
- DE-A1- 10 126 770
- DE-A1- 10 359 379
- DE-U1- 9 110 546
- GB-A- 1 297 706
- US-A- 4 357 111
- US-A- 5 243 007

## Beschreibung

Die Erfindung bezieht sich auf einen Mischgranulator mit einem einen gewölbt ausgebildeten Boden aufweisenden Mischbehälter und in Anpassung an den gewölbten Boden ausgebildete Mischwerkzeuge, die von einer vertikal ausgerichteten Antriebswelle getragen und angetrieben werden.

In der gattungsbildenden EP 0 439 689 B1 wird ein Mischgranulator beschrieben, der als Chargenmischer ausgebildet ist und der an seiner Bodenseite eine Austragsöffnung aufweist, durch die das Mischgut ausgetragen wird. Hierbei sind in dem Mischbehälter Rührwerkzeuge vorgesehen, die einerseits ein gutes Mischen des Mischgutes ermöglichen, andererseits durch Umkehr der Umlaufrichtung des Rührwerkes ein Austragen des Mischgutes aus einer im Boden angeordneten Austragsöffnung bewirken. Durch diese Anordnung wird also eine chargenweise Granulation und Entleerung des Mischgutes herbeigeführt, was immer wieder zur Unterbrechung des eigentlichen Mischvorganges führt.

Aus der JP 2000-354 753 A (Referat aus PATENT ABSTRACTS OF JAPAN) und der JP 61178031 A (Referat aus PATENT ABSTRACTS OF JAPAN) sind Mischgranulatoren bekannt, die - da die Austragsöffnung für das granulierte Fertiggut im unteren Bodenbereich liegt - nur chargenweise arbeiten können, d. h. eine kontinuierliche Produktion des Granulates und ein kontinuierliches Abführen des Granulates ist bei diesen bekannten Einrichtungen nicht möglich.

Das Gleiche gilt für die Einrichtung gemäß der schweizerischen Patentschrift 632 939. Auch hier erfolgt über ein Ventil das Öffnen des eigentlichen Mischbehälters, der bis zu einer großen Füllhöhe gefüllt wird, wobei bei dem chargenweisen Entleeren der größere Teil des Behälterinhaltes abgeführt wird, während ein Rest im unteren Bereich des Behälters verbleibt, so dass stets ein Bett von bereits verfestigtem rieselfähigen Gut aufrecht erhalten bleibt.

Der Erfindung liegt die Aufgabe zugrunde, einen Mischgranulator vorzuschlagen, mit dem ein kontinuierliches Mischen und Granulieren des Mischgutes möglich ist, d. h. es wird kein chargenweises Abgeben des granulierten Gutes vorgesehen, sondern die erfindungsgemäße Vorrichtung soll kontinuierlich arbeiten, d. h. das zu mischende Gut wird kontinuierlich zugeführt und kontinuierlich wird das erzielte Granulat abgeführt und beispielsweise einer Trocknungsvorrichtung zugeführt.

Diese der Erfindung zugrundeliegende Aufgabe wird durch die Lehre des Hauptanspruches gelöst.

Vorteilhafte Ausführungsformen sind in den Unteransprüchen erläutert.

So wird mit anderen Worten ausgedrückt gemäß der Erfindung vorgeschlagen, dass im Gegensatz zum gattungsbildenden Stand der Technik der Boden geschlossen ausgebildet ist, aber trotzdem gewölbt gestaltet ist und auch das Rührwerk oder die Mischwerkzeuge in Anpassung an die Wölbung des Bodens gewölbt gestaltet sind, so dass beim Betrieb des Mischwerkzeuges keine Zentrifugalkräfte auftreten, sondern ein gutes Mischen und damit Granulieren des eingefüllten Gutes erfolgt.

Der eigentliche Mischbehälter weist an seinem Seitenwandbereich eine Auslauföffnung auf, die maximal so eingestellt ist, dass die Unterkante der Auslauföffnung maximal mit der Oberkante des Rührwerkzeuges fluchtet. Vorzugsweise ist aber die Oberkante des Rührwerkzeuges unterhalb der unteren Kante der Auslauföffnung vorgesehen.

Schließlich sind Zugabevorrichtungen für Flüssigkeit und Feststoff vorgesehen, die kontinuierlich das zu mischende und zu granulierende Gut in den Behälter einfüllen, wobei ein kontinuierlicher Austrag des fertig gemischten und granulierten Gutes durch eine Auslauföffnung im Wandbereich erfolgt.

Um die Auslauföffnung an unterschiedliche Mischgüter einzustellen, wird gemäß einem Merkmal der Erfindung vorgeschlagen, dass die eigentliche Auslauföffnung eine die Größe der Auslauföffnung regulierende Regulierklappe aufweist.

Gemäß einem weiteren wesentlichen Merkmal der Erfindung ist vorgesehen, dass innerhalb des eigentlichen Mischbehälters und vor der Auslauföffnung eine den Austrag des Misch- und Granuliergutes unterstützende Hilfsvorrichtung vorgesehen ist.

Diese Hilfsvorrichtung kann mit einer Zerkleinerungsvorrichtung kombiniert sein, kann aber auch als normaler Rührflügel ausgebildet sein, wobei vorzugsweise die Umlaufrichtung des eigentlichen Misch- und Granulierwerkzeuges entgegen der Umlaufrichtung dieser Austragsvorrichtung eingestellt wird.

In der eigentlichen Auslauföffnung oder vor der Auslauföffnung kann ein Siebeinsatz vorgesehen sein.

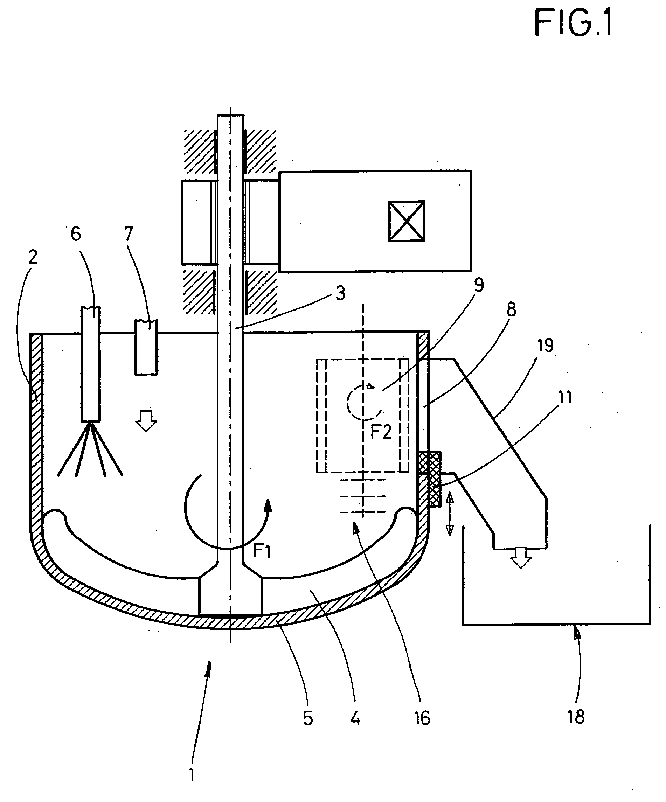

Ein Ausführungsbeispiel der Erfindung wird nachfolgend anhand der Zeichnungen erläutert. Die Zeichnungen zeigen dabei in
- Fig. 1: eine Gesamtansicht geschnitten auf den erfindungsgemäß ausgebildeten Mischgranulator, in
- Fig. 2: eine Teilansicht auf die Austragsvorrichtung, in
- Fig. 3: ebenfalls eine Teilansicht auf eine abgewandelte Ausführungsform der Austragsvorrichtung, in
- Fig. 4: ebenfalls eine Teilansicht auf eine abgewandelte Ausführungsform der Austragsvorrichtung, in
- Fig. 5: eine Teilansicht auf eine wiederum abgewandelte Ausführungsform der Austragsvorrichtung, in
- Fig. 6: eine Teilansicht auf eine abgewandelte Ausführungsform der Austragsvorrichtung und schließlich in
- Fig. 7: eine Draufsicht auf die erfindungsgemäße Anordnung.

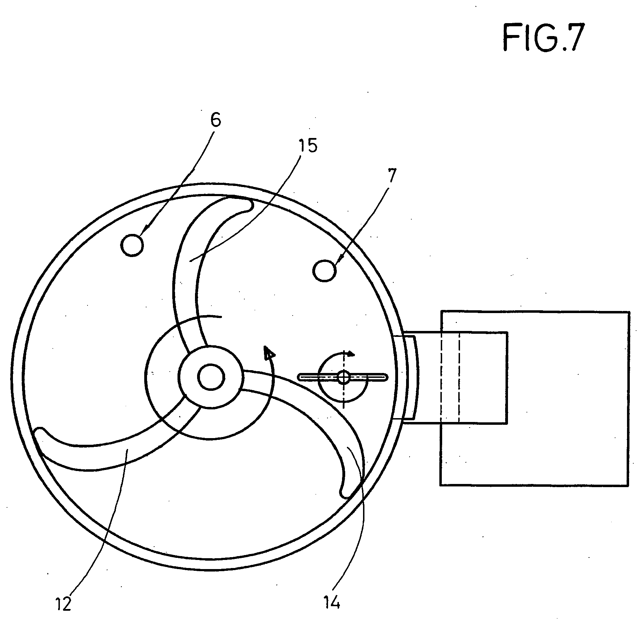

In den Zeichnungen ist mit 1 ein Mischgranulator bezeichnet, der aus einem Mischbehälter 2 gebildet wird, der einen gewölbten Boden 5 aufweist. In diesen Mischbehälter 2 führt eine Antriebswelle 3, die an ihrem unteren Ende das eigentliche Rühr- und Mischwerkzeug 4 trägt, das, wie dies besonders deutlich Fig. 7 zeigt, drei Flügel 12, 14 und 15 aufweist, die in Anpassung an den gewölbten Boden 5 ausgebildet sind. Dieses Mischwerkzeug 4 wird in Richtung des Pfeiles F1 angetrieben.

Im oberen Bereich des Mischbehälters 2 ist in der Zugabevorrichtung 6, 7 für Flüssigkeiten und Feststoff vorgesehen, die nach ihrem Eintrag durch das Misch- und Rührwerkzeug 4 entsprechend gemischt und granuliert werden.

Bei 8 ist in der Wandung des Mischbehälters 2 eine Auslauföffnung dargestellt, die über eine entsprechende Leitvorrichtung 19 zu einer Trocknungsvorrichtung 18 führt. Vor der Auslauföffnung 8 ist eine Regulierklappe 11 einstellbar vorgesehen, so dass dadurch die Höhe der Unterkante der Auslauföffnung 8 eingestellt werden kann.

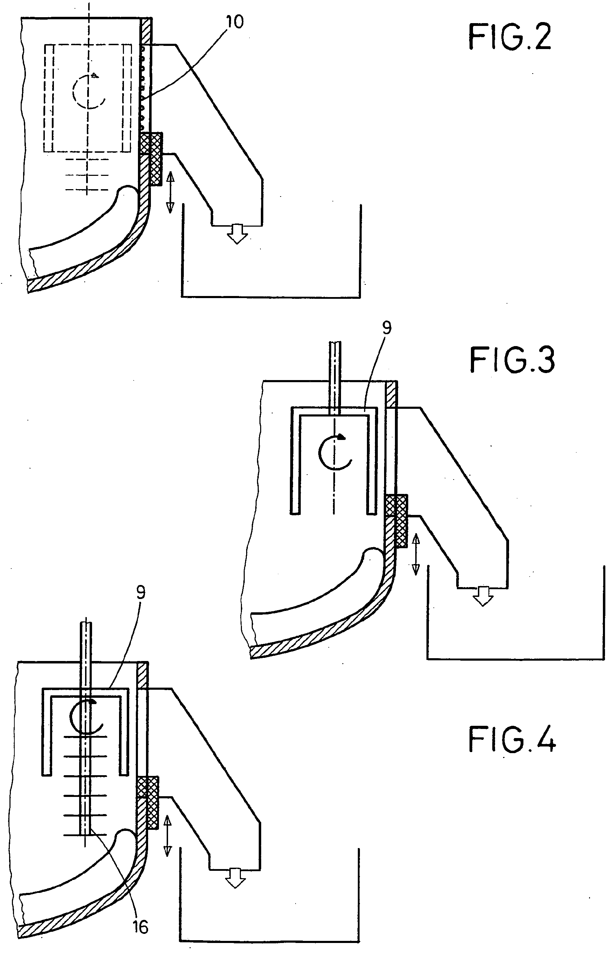

Wie dies Fig. 2 zeigt, kann in der Auslauföffnung 8 ein Siebeinsatz 10 vorgesehen sein, durch den ggf. zu große Granulate zurückgehalten werden.

Vor der Auslauföffnung 8 innerhalb des Mischbehälters 2 ist eine Hilfsvorrichtung 9 vorgesehen, die ein Zufördern des Granuliergutes zur Auslauföffnung 8 ermöglicht, gleichzeitig aber auch mit einer Zerkleinerungsvorrichtung 16 kombiniert sein kann. Diese Vorrichtung wird vorzugsweise in Richtung des Pfeiles F2 angetrieben, d. h. die Umlaufrichtung dieser Hilfseinrichtung 9 ist entgegengesetzt der Umlaufrichtung des Mischwerkzeuges 4, wodurch ein gutes Austragen und Abfördern des granulierten Gutes erreicht wird.

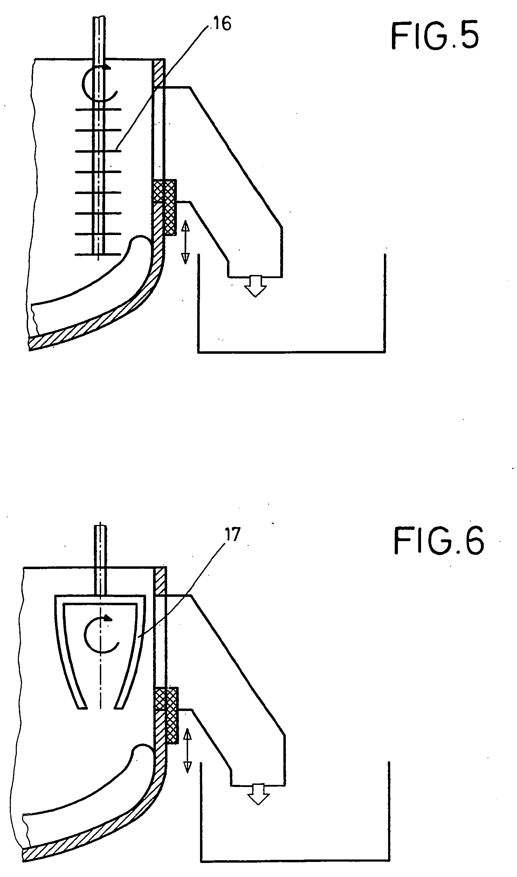

Bei der Ausführungsform gemäß Fig. 3 ist die Austragsvorrichtung 9 ohne Zerkleinerungswerkzeuge vorgesehen, während bei der Ausführungsform gemäß Fig. 4 eine entsprechende Kombination zwischen Austragsvorrichtung 9 und Zerkleinerungsvorrichtung 16 vorgesehen ist. Bei der Ausführungsform gemäß Fig. 5 sind lediglich Zerkleinerungswerkzeuge 16 vorgesehen und bei der Ausführungsform gemäß Fig. 6 ist ein Rührflügel 17 vorgesehen, der ein gutes Abfördern des Gutes ermöglicht.

In der Zeichnung sind die eigentlichen Flügel 12, 14 und 15 des Rührwerkzeuges 4 so dargestellt, als ob sie auf dem Boden 5 des Mischbehälters 1 aufliegen. Es ist selbstverständlich möglich, dass zwischen der Unterkante der Werkzeuge und dem Boden 5 des Mischbehälters 1 auch ein kleiner Freiraum vorhanden ist, der beispielsweise von einem der Flügel 12, 14 oder 15 freigeräumt wird.

Auch zeigt die Fig. 7, dass die Hilfsvorrichtung 9 auch als normales Paddel ausgebildet sein kann. Wie bereits ausgeführt, erscheint es sinnvoll, dass die Oberkante der Flügel 12, 14 und 15 des Mischwerkzeuges 4 maximal bis zur Unterkante der Auslauföffnung 8 reicht, wobei in den Zeichnungen, aber hier auch noch eine Distanz dargestellt ist, die dann von dem Hilfswerkzeug 9 überbrückt wird.

## Patentansprüche

1. Mischgranulator mit einem Mischbehälter und einem darin befindlichen, eine vertikal ausgerichtete Antriebswelle aufweisenden Rührwerk, bei dem der Mischbehälter an seiner Bodenseite gewölbt ausgebildet ist und in Anpassung an den gewölbten Boden gewölbt ausgebildete Mischwerkzeuge vorgesehen sind, **dadurch gekennzeichnet,**
a) **dass** der Boden (5) geschlossen ausgebildet ist,
b) der Mischbehälter (2) im Wandbereich eine Auslauföffnung (8) aufweist, die maximal so eingestellt ist, dass die Unterkante der Auslauföffnung (8) maximal mit der Oberkante des Rührwerkzeuges (4) fluchtet und
c) Zugabevorrichtungen (6, 7) für Flüssigkeit und Feststoffe in den eigentlichen Mischbehälter (2) vorgesehen sind.

2. Mischgranulator nach Anspruch 1, **dadurch gekennzeichnet, dass** die Oberkante des Rührwerkzeuges (4) unterhalb der unteren Kante der Auslauföffnung (8) liegt.

3. Mischgranulator nach Anspruch 1 oder 2, **dadurch gekennzeichnet, dass** innerhalb des Mischbehälters (2) vor der Auslauföffnung (8) eine den Austrag des Misch- und Granuliergutes unterstützende Hilfsvorrichtung (9) vorgesehen ist.

4. Mischgranulator nach Anspruch 3, **dadurch gekennzeichnet, dass** die Hilfsvorrichtung (9) mit einer Zerkleinerungsvorrichtung (16) kombiniert ist.

5. Mischgranulator nach einem oder mehreren der vorhergehenden Ansprüche, **dadurch gekennzeichnet, dass** die Hilfsvorrichtung (9) als Rührflügel (17) ausgebildet ist.

6. Mischgranulator nach einem oder mehreren der vorhergehenden Ansprüche, **dadurch gekennzeichnet, dass** die Auslauföffnung (8) eine die Größe der Öffnung regulierende Regulierklappe (11) aufweist.

7. Mischgranulator nach einem oder mehreren der vorhergehenden Ansprüche, **dadurch gekennzeichnet, dass** vor oder innerhalb der Auslauföffnung (8) ein Siebeinsatz (10) vorgesehen ist.

8. Mischgranulator nach einem oder mehreren der vorhergehenden Ansprüche, **dadurch gekennzeichnet, dass** an die Auslauföffnung (8) eine Trocknungseinrichtung (18) anschließt.

9. Mischgranulator nach einem oder mehreren der vorhergehenden Ansprüche, **dadurch gekennzeichnet, dass** die Umlaufrichtung F1 des Mischwerkzeuges (4) entgegengesetzt der Umlaufrichtung F2 der Austragsvorrichtung (9) ist.

## Claims

1. Mixing granulator comprising a mixing vessel and an agitator with a vertically aligned driving shaft located therein, where the bottom of the mixing vessel is domed, and curved mixing tools are provided to fit exactly into the domed bottom of the vessel, **characterised in,**
a) **that** the bottom (5) of the vessel is closed,
b) **that** the mixing vessel (2) has an outlet opening (8) in the wall area, which, at its maximum, is set in such a way that the lower edge of the outlet (8) is aligned with the upper edge of the agitating tool (4) at its maximum setting, and
c) **that** infeed devices (6, 7) for liquid and solid materials are provided in the mixing vessel (2) itself.

2. Mixing granulator in accordance with claim 1, **characterised in that** the upper edge of the agitating tool (4) lies beneath the lower edge of the outlet opening (8).

3. Mixing granulator in accordance with claim 1 or claim 2, **characterised in that** an auxiliary device (9) is provided within the mixing vessel (2) in front of the outlet opening (8) in order to facilitate the discharge of the mixed and granulated product.

4. Mixing granulator in accordance with claim 3, **characterised in that** the auxiliary device (9) is combined with a comminuting device (16).

5. Mixing granulator in accordance with one or several of the preceding claims, **characterised in that** the auxiliary device (9) is formed as agitator blades (17).

6. Mixing granulator in accordance with one or several of the preceding claims, **characterised in that** the outlet opening (8) has a regulating flap (11) for regulating the size of the opening.

7. Mixing granulator in accordance with one or several of the preceding claims, **characterised in that** a sieve element (10) is provided in front of or inside the outlet opening (8).

8. Mixing granulator in accordance with one or several of the preceding claims, **characterised in that** a drying device (18) adjoins the outlet opening (8).

9. Mixing granulator in accordance with one or several of the preceding claims, **characterised in that** direction of rotation F1 of the mixing tool (4) is opposed to the direction of rotation F2 of the discharging device (9).

## Revendications

1. Granulateur mélangeur avec un réservoir mélangeur et un agitateur situé à l'intérieur et présentant un arbre d'entraînement vertical, où le fond du réservoir mélangeur est configuré concave et où sont prévus des outils mélangeurs configurés convexes pour épouser le fond concave, **caractérisé en ce que**
a) le fond (5) est configuré fermé,
b) dans la zone de la paroi, le réservoir mélangeur (2) présente un orifice de sortie (8) réglé au maximum de telle manière que l'arête inférieure de l'orifice de sortie (8) soit au maximum dans l'alignement de l'arête supérieure de l'outil agitateur (4) et
c) des dispositifs d'ajout (6, 7) de liquides et de matières solides sont prévus dans le réservoir mélangeur (2) proprement dit.

2. Granulateur mélangeur selon la revendication 1, **caractérisé en ce que** le bord supérieur de l'outil agitateur (4) se trouve en dessous du bord inférieur de l'orifice de sortie (8).

3. Granulateur mélangeur selon la revendication 1 ou 2, **caractérisé en ce qu'**à l'intérieur du réservoir mélangeur (2) est prévu, devant l'orifice de sortie (8), un dispositif auxiliaire (9) facilitant le déversement du produit mélangé et granulé.

4. Granulateur mélangeur selon la revendication 3, **caractérisé en ce que** le dispositif auxiliaire (9) est combiné avec un dispositif de broyage (16).

5. Granulateur mélangeur selon l'une ou plusieurs des revendications précédentes, **caractérisé en ce que** le dispositif auxiliaire (9) est configuré comme pale agitatrice (17).

6. Granulateur mélangeur selon l'une ou plusieurs des revendications précédentes, **caractérisé en ce que** l'orifice de sortie (8) présente un clapet régulateur (11) régulant la taille de l'orifice.

7. Granulateur mélangeur selon l'une ou plusieurs des revendications précédentes, **caractérisé en ce qu'**en amont ou à l'intérieur de l'orifice de sortie (8) a été prévu un insert (10) de tamisage.

8. Granulateur mélangeur selon l'une ou plusieurs des revendications précédentes, **caractérisé en ce qu'**à l'orifice de sortie (8) est raccordé un dispositif de séchage (18).

9. Granulateur mélangeur selon l'une ou plusieurs des revendications précédentes, **caractérisé en ce que** le sens de rotation F1 de l'outil mélangeur (4) est contraire au sens de rotation F2 du dispositif de déversement (9).
